# EUROPÄISCHE PATENTSCHRIFT

(11) **EP 1 059 315 B1**
(45) Veröffentlichungstag und Bekanntmachung des Hinweises auf die Patenterteilung: **13.10.2004**
(21) Anmeldenummer: 00111238.2
(22) Anmeldetag: 25.05.2000
(51) Int. Cl.: C08F 222/38, C08F 222/16, C09J 7/04

(54) **Verfahren zur Herstellung von Trennmitteldispersionen**
Process for the production of release dispersions and their use
Procédé pour la fabrication de dispersions anti-adhésives et leur utilisation

(30) Priorität: 09.06.1999 DE 19926169
(43) Veröffentlichungstag der Anmeldung: 13.12.2000
(73) Patentinhaber: tesa AG, 20253 Hamburg (DE)
(72) Erfinder: Gleichenhagen, Peter, Dr., 22417 hamburg (DE); Müller, Annemarie, 22459 Hamburg (DE)

(56) Entgegenhaltungen:
- EP-A- 0 619 328
- DE-A- 3 510 324
- US-A- 3 342 625
- US-A- 4 331 718
- US-A- 4 339 246
- US-A- 5 624 751

## Beschreibung

Die vorliegende Erfindung ist eine Weiterentwicklung der unter DE 28 45 541 beschriebenen Verfahrensweise und betrifft die Herstellung von klebstoffabweisenden Beschichtungen auf der Rückseite haftklebenden Artikeln, die durch eine Beschichtung mit einer aus wäßriger Dispersion erzeugten Trennschicht eine hydrophobe und klebstoffabweisende Oberfläche aufweisen. Derartige Beschichtungen werden häufig bei der Herstellung von Haftklebebändern, bzw. Etiketten verwendet. Diese Artikel bestehen zumeist aus einem flächigen Trägermaterial , wie z.B. Folien, Geweben oder Papieren, das ein- oder beidseitig mit einer haftklebenden Beschichtung versehen ist. Um diese Beschichtung vor unerwünschter Verklebung zu schützen, wird diese bis zum Zeitpunkt der Anwendung mit einer dehäsiven Abdeckung versehen. Bei Haftklebebandrollen kann die dehäsiv ausgerüstete Rückseite des Trägermaterials diese abdeckende Funktion übernehmen. Ein negativer Einfluß auf die Haftklebeschicht durch Diffusionsprozesse oder nachlassende Dehäsivwirkung während der Lagerung, insbesondere bei Einfluß höherer Temperaturen und Luftfeuchte, ist unerwünscht.

In einer Vielzahl der Anwendungen von haftklebenden Abdeckungen werden an die dehäsive Beschichtung der Trägerrückseite zusätzliche, spezielle Anforderungen gestellt. Bei Haftklebebandrollen muß die Dehäsivbeschichtung z.B. eine definierte Restadhäsion zur Haftklebeschicht aufweisen, damit bei Transport, Lagerung und Gebrauch die Windungen sich nicht untereinander verschieben, andererseits aber von Hand oder in Automaten ausreichend leicht ablängbar sind. Häufig übernehmen derartige Beschichtungen auch wesentliche weitere Funktionen für die jeweilige Anwendung. So ist beim Einsatz auf Gewebeträgern z.B. im Wundversorgungsbereich neben der Trennwirkung die atmungsaktive Hydrophobierung mittels derartiger Beschichtungen eine zusätzliche Anforderung. Bei Krepp-Papieren, die häufig als Trägermaterial für Abdeckbänder dienen, wird für die besondere Beanspruchung im Maler- und Lackierbereich eine Verfestigung des Papiers zur Erhöhung der Naßreißfestigkeit mittels derartiger Beschichtungen gefordert. Außerdem sollen sie die Papieroberfläche gegen nasse und trockne schmirgelnde Beanspruchung schützen. Als weitere Anforderung muß die dehäsive Beschichtung eine sichere Haftung für aufgesprühte Farb- und Lackformulierungen aufweisen, damit abperlende Sprühreste die behandelten Flächen nicht verschmutzen. Die Verwendung von silicon- oder fluororganisch basierten Trennfilmen, die bei Haftklebartikeln häufig eingesetzt werden, ist besonders in diesem Industriebereich unerwünscht.

Bedenkt man, daß dieses komplexe Anforderungsprofil bei Einsatz unterschiedlichster Haftklebebeschichtungen auf verschiedensten Trägermaterialien erfüllt werden soll, dann wird die Anzahl bereits vorgeschlagener Trennmittel verständlich.

In der US-PS 2 269 712 werden für die Rückseitenlackierung von haftklebenden Abdeck-Papierbändem Schellack oder Nitrocellulose und andere Cellulosederivate vorgeschlagen. Derartige Beschichtungen entsprechen den heutigen Anforderungen in keiner Weise, da sie kaum Dehäsivwirkung besitzen und dementsprechend ein Ablängen von der Rolle äußerst schwierig gestalten. Außerdem werden diese Stoffe aus Lösungen mit organischen Lösemitteln beschichtet, was heute aus Kostengründen und Aspekten des Umweltschutzes unerwünscht ist.

In der US-PS 3 438 794 wird der Einsatz von Carboxymethylcellulose im Gemisch mit wasserlöslichen Salzen von aliphatischen Sulfonsäuren mit längeren KW-Ketten für den gleichen Zweck beschrieben. Des weiteren lehrt die US-PS 2 358 831 die Verwendung von Seifen und die US-PS 2 032 845 den Einsatz von Wachs als Trennmittel. Diese Produkte entsprechen den heutigen Anforderungen nicht, da die trennwirksamen Anteile wie Seifen oder Wachse niedermolekulare diffusionsfähige Stoffe sind, die bereits nach kurzer Lagerzeit von Haftkleberollen die Haftkraft der verschiedensten haftklebenden Beschichtungen deutlich absenken.

Um diese Problematik zu umgehen, werden gemäß der US-PS 2 803 557 niedermolekulare Dehäsivmittel auf eine Papieroberfläche aufgebracht und dort zu polymeren Werner-Chromkomplexen der Stearinsäure umgewandelt. Diese Verfahrensweise ist kostenaufwendig, verursacht unerwünschte Verfärbungen und ist wegen der eingesetzten Chromverbindungen toxikologisch bedenklich.

Polymere Trennmittel sind seit längerem bekannt. In der DE-PS 872 621 werden copolymere Acrylate beschrieben, deren Trennwirkung durch größere Anteile höherer Homologe von Acrylestern erzielt wird. Auf ähnlicher Rohstoffbasis fußen die Anmeldungen DE-AS 1 594 057 und DE-AS 1 300 852.

Neben den Copolymeren auf Basis von Acrylestern sind auch Copolymere aus Olefinen bzw. Vinylethern mit Maleinsäureanhydrid bekannt. Die Trennwirkung wird durch eine polymeranaloge Umsetzung der Anhydridgruppen mit Stearylalkohol oder Stearylamin erzielt, wie dies in der DE-AS 1 075 772 bzw. US-PS 3 342 625 beschrieben wird. Die US-PS 4 029 843 lehrt z.B. für diesen Zweck ein Copolymer aus Octadecen oder n-Hexen mit Maleinsäureanhydrid.

Auch Polyadditionen werden zur Erzeugung von Trennschichten durchgeführt. Bekannt ist die Polyaddition von langkettigen Diaminen und/oder Diolen an Diisocyanate, wie sie in der US-PS 3 970 599 beschrieben wird oder die Umsetzung von Prepolymeren, die Isocyanatgruppen tragen, mit Hydroxylgruppen oder Aminogruppen spezieller Organosilicone gemäß US-PS 3 997 702. Bekannt ist in diesem Zusammenhang auch die Umsetzung von Polyvinylalkohol mit Stearylisocyanat.

Nahezu alle oben genannten Trennmittel werden in organischen Lösemitteln hergestellt und sind heute wegen der damit verbundenen Kosten und der Auflagen des Umweltschutzes von geringem Interesse. Insbesondere bei saugfähigen Trägermaterialien, wie z.B. Kreppapieren, die für Abdeck-Haftklebebänder besonders häufig eingesetzt werden, sind wasserbasierte Zubereitungen erwünscht. Hinweise auf wasserbasierte Systeme finden sich in der Literatur aber nur seiten und betreffen meistens Sekundär-Dispersionen, die aufwendig durch Entfernen der Lösemittel hergestellt werden müssen. Ein weiterer Nachteil sind die verhältnismäßig niedrigen Erweichungsbereiche, wodurch die Trennwirkung bei höheren Lagertemperaturen deutlich vermindert wird . Schließlich sind auch die verhältnismäßig hohen Rohstoffkosten von polymerisierbaren höheren Homologen der entsprechenden Vinylestern und -ethern von Nachteil für den praktischen Einsatz derartiger Verbrauchsgüter. Einen guten Kompromiß stellen die Trennmittel auf der Basis von Copolymeren aus Styrol mit Maleinsäureanhydrid und nachfolgender polymeranaloger Umsetzung der Anhydridgruppen mit Stearylamin dar, wie dies in der bereits genannten US-PS 3 342 625 beschrieben wird. Bei vertretbar niedrigen Rohstoffkosten werden mit diesem Verfahren dehäsive Polymere mit Erweichungsbereichen > 100°C hergestellt. Nachteilig ist hierbei die Polymerisation in aromatischen, toxikologisch bedenklichen Lösemitteln, wie z.B. Toluol.

Eine weitere Verbesserung zeigt die eingangs genannte DE 28 45 541 auf, bei der ohne Verwendung von Lösemitteln, durch direkte Emulsionspolymerisation in basischem wäßrigem Medium trennwirksame Copolymere aus Vinylverbindungen wie z.B. Styrol mit Stearyl-Derivaten der Maleinsäure hergestellt werden können. Hierzu wird in einer Vorstufe Maleinsäureanhydrid z.B. mit Stearylamin zum Maleinsäure-monostearylamid umgesetzt und anschließend in wäßriger, ammoniakalischer Lösung bei PH 9 radikalisch polymerisiert. Durch die Bildung des Ammoniumsalzes erhält das Maleinsäure-monostearylamid die Fähigkeit, als einpolymerisierbarer Emulgator für die Emulsionspolymerisation zu wirken. Nach dem Ausstreichen der Polymerdispersion auf einem Trägermaterial und Trocknen bei >100°C bildet sich ein dehäsiver Film unter Abspalten von Ammoniak. Außerdem wird durch die zumindest teilweise Aufhebung der Salzform die Hydrophilie verringert, so daß der Trennfilm trotz der hohen Anzahl von Carboxylgruppen zusätzlich stark wasserabstoßend wirkt.

Nachteilig bei dieser Verfahrensweise ist die Freisetzung erheblicher Mengen von Ammoniak während der Trocknung, was u.a. aus Gründen des Umweltschutzes unerwünscht ist. Des weiteren hat sich gezeigt, daß bei der dort beanspruchten Emuisionspolymerisation im basischen Medium größere Anteile der trennwirksamen Maleinsäure-derivate - z.B. Maleinsäure-monostearylamid - in monomerer Form erhalten bleiben und nicht in die entsprechenden Copolymerisate z.B. mit Styrol einpolymerisiert werden. Dies ist im wesentlichen darin begründet, daß im basischen Medium die Maleinsäure-monoamide bzw. -ester als wasserlösliche Salze vorliegen und dadurch eine Umsetzung mit den wasserunlöslichen Comonomeren verzögert oder behindert wird. Zwar fördern monomere Trennsubstanzen, die bei guter Verträglichkeit im Polymerfilm fest verankert sind, die Trennwirkung. Ein zu hoher Anteil trennwirksamer monomerer Bestandteile der Trennschicht wirkt sich aber bei höherer Lagertemperatur oder Luftfeuchte störend auf die Haftklebeschicht und die Trennwirkung aus. Außerdem können größere Anteile der polymeren emulgierten Partikel wegen ihrer geringen Größe bei Beschichtung von Papieren in das Fasergefüge eindringen und für die Trennwirkung unwirksam werden.

Aufgabe der Erfindung war demgemäß die Herstellung von Trennmitteln auf Basis von in wäßriger Dispersion hergestellten Copolymeren mit Maleinsäureanhydrid-Derivaten, die die oben beschriebenen Nachteile nicht aufweisen.

### Beschreibung der Erfindung:

Die erfindungsgemäß hergestellten Trenndispersionen für klebstoffabweisende Beschichtungen bestehen aus durch radikalische Polymerisation in wäßriger Dispersion erzeugten Copolymeren von Maleinsäure-monoamiden oder -estem mit z.B. Styrol, Vinylacetat , Vinylethern, Olefinen,(Meth)acrylaten oder deren Gemischen. Bevorzugt werden als Hauptbestandteile Maleinsäure-monoamide bzw.-ester mit Kohlenwasserstoffresten von 14-18 Kohlenstoffatomen verwendet. Besonders bevorzugt sind wegen ihres hohen Glasübergangsbereichs Copolymere aus Maleinsäure-monoamiden mit Styrol. Zur Erhöhung der Trennwirkung können zusätzlich weitere trennwirksame Monomere wie z.B. (Meth)acrylsäure-stearylester einpolymerisiet werden.

Die Molverhältnisse der Monomerzusammensetzung werden bezüglich Styrol/Maleinsäure-derivat bevorzugt im Bereich 1/1 gewählt, können aber insbesondere bei Rezeptierung mit weiteren Comonomeren hiervon deutlich abweichen.

Die Polymerfilme zeigen nach Trocknung auf den Trägermaterialien, z.B. Krepp-Papieren, eine Trennwirkung, deren Ausprägung durch die Polymerzusammensetzung gezielt eingestellt werden kann. Für eine ausreichende Haftung von antrocknenden Lackresten kann außerdem eine Abmischung der Trenndispersionen mit weniger trennwirksamen filmbildenden wäßrigen Latices die Trennwirkung herabsetzen. Besonders gut geeignet sind hierfür Polymer-Latices auf Basis Styrol/Butadien, die mehr oder weniger stark carboxyliert sein können und im nassen und getrockneten Zustand mit den Trenndispersionen sehr gut verträglich sind . Dabei kann, abhängig von der jeweiligen Anwendung, das Mischungsverhältnis in einem weiten Bereich variiert werden. Die mit dieser Maßnahme zusätzlich erzielte Flexibilisierung und verbesserte Filmbildung wirkt sich auf die Handhabung und den Schutz des Trägermaterials gegen Schädigung durch eindringendes Wasser - z.B. aus Dispersionsfarben - günstig aus. Eine Flexibilisierung kann auch durch Einpolymerisieren von flexibilisierenden Monomeren wie Vinylethern oder Olefinen erreicht werden, die auch als alleinige Comonomere einsetzbar sind. Verbindungen dieser Stoffklassen können, wenn sie bei Raumtemperatur gasförmig vorliegen - z.B. Isobuten - vorteilhaft in größeren Überschüssen eingesetzt werden, da die nach der alternierenden Copolymerisation mit den Maleinsäurederivaten verbleibenden nicht einpolymerisierten Monomeren sehr leicht durch Abdestillieren rückgewinnbar sind. In geringem Umfange können auch Di-ester bzw.-amide der Maleinsäure oder Fumarsäure einpolymerisiert werden, so daß mit einer entsprechenden Auswahl von Monomeren aus den oben genannten Stoffklassen das Eigenschaftsprofil der trennwirksamen Copolymere in weiten Grenzen variiert werden kann.

Die Dispersionen werden durch radikalische Polymerisation vorzugsweise im neutralen oder sauren wäßrigen Medium hergestellt, wobei keine oder nur geringe Mengen an Alkalien, z.B. Ammoniak, eingesetzt werden. Das Monomergemisch wird in einem Polymerisationsreaktor insbesondere bei Temperaturen von 60-90°C in flüssiger Form mittels Dispergierscheiben oder anderen dispergierenden Rührelementen in Wasser fein verteilt. Zur Einstellung der Teilchengröße und zur Stabilisierung der Monomerdispersionen werden wasserlösliche Polymere vorzugsweise Polyvinylalkohole im Gemisch mit Polyvinylpyrrolidon und nichtionischen Emulgatoren aus der Stoffklasse ethoxylierter Fettalkohole der Wasserphase zugefügt. Für die Herstellung der erfindungsgemäßen Dispersionen hat sich diese Kombination von stabilisierenden Substanzen als wirksam und vorteilhaft erwiesen. Der Einsatz einzelner Komponenten aus den genannten Stoffklassen allein führt im allgemeinen zu unbefriedigenden Ergebnissen. Die Konzentration hydrophiler Stabilisatoren soll in Summe bezogen auf die Monomermenge insbesondere ca. 8 Gew-% nicht überschreiten. Höhere Konzentration stören die hydrophobe Oberfläche der erzeugten Trennfilme und erleichtern das Eindringen von Wasser. Der pH-Wert kann bei Bedarf durch Zufügen geringer Mengen basischer Substanzen - vorzugsweise Ammoniak - eingestellt werden. Die dadurch verstärkte negative Ladung der Teilchen stabilisiert zusätzlich gegen Agglomerationen. Anionische Emulgatoren können mit verwendet werden, sind für eine Stabilisierung aber nicht unumgänglich. Die radikalische Polymerisation wird nach dem Mechanismus einer Perlpolymerisation durchgeführt, wobei Teilchengrößen im Bereich 1µm - 70µm erzeugt werden. Teilchengrößenbereiche zwischen 3µm - 50µm sind besonders bevorzugt. Mit diesen Teilchengrößen lassen sich, abhängig vom Teilchengrößenbereich, glatte oder rauhe Trennschichten mit definierter Rauhigkeit der Oberflächen erzeugen. Im Kontakt mit haftklebenden Filmen können rauhe Oberflächen eine wesentlich geringere Benetzungsfläche bilden als sie vergleichsweise mit glatten Trennbeschichtungen erzeugt wird. Dadurch wird die Trennwirkung erhöht und der negative Einfluß von diffusionsfähigen Störstoffen zwischen den Beschichtungen verringert.

Außerdem wird bei größeren Teilchen das unerwünschte Eindringen der trennwirksamen Substanz in das Fasergefüge von Papieren oder Geweben weitgehend unterbunden und die Haftung von aufgesprühten Lacken oder Streichfarben erhöht. Glattere Trennschichten sind hingegen besser bedruckbar und für manuelle Anwendungen verarbeitungsfreundlicher.

Die Steuerung der Teilchengrößenverteilung ist vorrangig über die Zusammensetzung und Konzentration der Stabilisatoren und der Monomeren möglich. Auch die Rührerdrehzahl und -Geometrie haben, wenn auch nur untergeordnet, einen Einfluß auf die Teilchengröße. Außerdem hat die durch die Initiatoren erzeugte Radikalkonzentration und die Löslichkeit der Radikalbildner einen wesentlichen Einfluß. So können z.B. wasserlösliche Initiatoren wie Ammoniumperoxidisulfat in Anwesenheit von Mizellen bildenden Emulgatoren neben der Perlpolymerisation auch deutlich feinteiligere Polymerpartikel mit Durchmessern < 1 µm entsprechend dem Mechanismus der Emulsionspolymerisation erzeugen. Als geeignete Emulgatoren können hierfür auch die aus trennwirksamen Monomeren, wie z.B. Maleinsäure-monostearylamid, durch Zugabe von geringen Mengen Ammoniak erzeugten Seifen dienen.

Zur Erzeugung eines hohen Anteils feinteiliger Teilchen können derartige Emulgatoren allein für die Stabilisierung ausreichen. Zur Verankerung der größeren Teilchen durch Einbettung auf dem Trägermaterial beim Trocknen ist ein kleinerer Anteil an verfilmendem, feinteiligem Emulsionspolymerisat wünschenswert, insbesondere dann, wenn zur Erzielung sehr hoher Trennwirkung keine Abmischung mit einem filmbildendem Latex vorgesehen ist.

Falls eine Vernetzung des Polymers erwünscht ist, kann diese z.B. durch Einpolymerisieren von Divinylbezol oder anderen mehrfach ungesättigten Verbindungen erzeugt werden. Auch thermische Vernetzungen bei der Filmbildung sind mit den üblichen Methoden der Vernetzung von Dispersionspolymeren möglich, z.B. durch Einpolymerisieren von N-Methylolacrylamid oder Zusätzen wie Zn -acetat und andere für Carboxylgruppen enthaltende Dispersionspolymere übliche Vernetzer.

Die Polymerisation kann bei Monomerkonzentrationen zwischen 10-60 Gew.% vorzugsweise 25-40 Gew. % im Temperaturbereich von ca 60-90°C unter Verwendung von im Monomergemisch löslichen und/oder wasserlöslichen Radikalbildnern innerhalb von ca. 4 h durchgeführt werden.

Für eine besonders ökonomische Herstellung der Trenndispersionen kann die Synthese der trennwirksamen Maleinsäure- monoamide bzw.-ester in einer Vorstufe im Polymerisations-reaktor durchgeführt werden. Hierzu wird das Reaktionsgut, z.B. Stearylamin und Maleinsäureanhydrid in Styrol, das für diese Additionsreaktion zunächst lediglich als Lösemittel dient und gegen unerwünschte Polymerisation ausreichend inhibiert ist, zu Maleinsäure-monostearylamid umgesetzt und zu einer klaren Lösung erhitzt. Anschließend werden die Wasserphase und die Stabilisatoren hinzugefügt, die Monomeren dispergiert und nach Erreichen der Reaktionstemperatur polymerisiert. Dabei kann es zur Beherrschung der Exothermie und zur Erzeugung enger Teilchengrößen-verteilungen von Vorteil sein, für die Vorstufe nur einen Teil des Comonomeren, in diesem Beispiel Styrol, vorzulegen. Der zurückbehaltene Anteil wird nach oder während der Polymerisation des in der Vorstufe erzeugten Monomerengemisches eindosiert.

Die erhaltenen Dispersionen können direkt oder mit weiteren Zusätzen wie Benetzungshilfen, Entschäumern, Verdickem oder Filmbildnern auf Trägermaterialien verstrichen und zu Beschichtungen getrocknet werden. Übliche Schichtstärken liegen zwischen ca. 3 -10g/qm.

Nachfolgend wird die Erfindung anhand von Beispielen erläutert.

### Experimenteller Teil

### Beispiel 1

In einer 2L - 4 Hals-Glasapparatur, ausgerüstet mit Dispergierscheibe (Durchm. 8cm), Rückflußkühler, Stickstoff-Einleitrohr, Thermometer und Dosiervorlage werden 91,9 g Styrol = 0,88 Mol (Reinheit >99%, stab.mit 0,005% 4-tert.-butylcatechol), 79,2 g Maleinsäure-anhydrid = 0,808 Mol (Reinheit >99%) und 215,2 g destilliertes Stearylamin = 0,8 Mol ( Armeen 18 D Firma Akzo Nobel) unter Rühren auf 85°C erhitzt, bis eine klare Lösung des Reaktionsprodukts Maleinsäure-monostearylamid in Styrol entstanden ist.

Anschließend wird eine Lösung von

| | | |
|---|---|---|
| 5,13 g | Polyvinylpyrrolidon (Luviskol K90 Firma BASF), | = 1,33% bez. Monomergemisch |
| 3,86g | Polyvinylalkohol (G04/140 Fa Wacker), | = 1,00% |
| 12,85 g | ethoxyl. Fettalkohol (Lutensol AT 50 Fa BASF) | = 3,335 |

in 828 g entioniertes Wasser = 67% bez. auf Gesamtmenge unter Rühren (500 U/min) eindosiert und das entstandene Gemisch innerhalb 30 min. unter Beibehaltung der Rührer-Drehzahl und Überleiten von Stickstoff auf 83°C erhitzt bis eine homogene Dispersion der Monomeren resultiert.

Danach wird die Polymerisation durch Eindosieren von 23,3g einer wäßrigen 5%igen Lösung von Ammonium-peroxodisulfat initiiert. Die Reaktionstemperatur steigt innerhalb 20 min. auf 87°C an. Nach Überschreiten des Temp.Maximums werden weitere 46,4 g der Initiatorlösung innerhalb 30 min zudosiert und die Polymerisation bei 84°C innerhalb einer Gesamtreaktionszeit von 4 h zu Ende geführt.

| | | |
|---|---|---|
| Restmonomer | Maleinsäure-monostearylamid (high perf. liqu. chrom.) | 2,4% bez: Polymer |
| | Styrol (gas chrom.) | 0,1 % |
| Teilchendurchmesser (Lichtmikroskop) pH 4 | 95% | 6-15 |
| Viskosität bei 24,2°C | 0,88 Pa s bei Schergeschw. 10 1/s (Mettler RM 180 Messbecher 1 Spindel 2) | |
| Feststoff | 33% Molverhältnis Styrol Maleinsäure-monostearylamid im Feststoff 1,1 /1. | |

In einer Polymerisationsapp. werden, analog zu Beispiel 1, 87,0 g Stearylamin mit 32,0 g Maleinsäureanhydrid in 60,0 g Styrol zu einer klaren Lösung von maleinsäure-monostearylamid in Styrol umgesetzt. Danach werden 533 g entionisiertes Wasser, in dem 1,33 % Polyvinylpyrrolidon (Luviskol K90 Fa BASF), 1% Polyvinylalkohol (Polyviol G04/140 Fa Wacker) und 3,3% ethox. Fettalkohol (Lutensol AT 50 Firma BASF) bez. gesamte Monomermenge gelöst sind, eindosiert und das Gemisch unter Rühren (500 U/min) auf 83°C erhitzt. Die Initiierung der Polymerisation erfolgt wie in Beispiel1 beschrieben durch Zugabe von 0,5% (bez. Monomere) Ammonium-peroxodisulfat in Form einer 5%igen wäßrigen. Lösung. Während der Polymerisation werden nach Durchlaufen des Temp.Maximums von 89°C im Zeitraum von 40 min weitere 60 g Styrol und 0,5% (bez.Monomere) Initiator eindosiert. Danach wird die Polymerisation innerhalb weiterer 3 h bei 83°C zu Ende geführt.

| | | |
|---|---|---|
| Restmonomer | Maleinsäure-monostearylamid (high perf. liqu. chrom.) | 1,8% bez. Polymer |
| | Styrol (gas chrom.) | 0.1% |
| Teilchendurchmesser pH Wert 4 | 95% | 15 - 70µm (Lichtmikroskop) |
| Viskosität bei 24,2°C | 0,98 Pa s bei Schergeschw. 10 1/s (Mettler RM 180 Messbecher1 Spindel 2). | |
| Feststoff | 30,7% Molverhältnis Styrol / Maleinsäure-monostearylamid im Feststoff 3,5/1. | |

### Beispiel 3

### (Vergleichstest mit Polymerisation im basischen Medium)

Die Reaktionsdurchführung von Beispiel 2 wird mit folgenden Änderungen wiederholt:
1. Die Zusätze von Polyvinylalkohol, Polyvinylpyrrolidon und ethoxyliertem Fettalkohol entfallen.
2. Der pH Wert der Wasserphase wird mit konzentriertem Ammoniak vor der Initiierung der Polymerisation auf 9,5 eingestellt, und durch Homogenisieren der Mischung, ohne weitere Zusätze von Stabilisatoren, eine Monomer-Emulsion hergestellt. Diese wird, wie in Beispiel 2 beschrieben unter Nachdosieren von Styrol polymerisiert.

| | | |
|---|---|---|
| Restmonomer | Maleinsäure-monostearylamid | 15,4% bez. Polymer (HPLC) |
| Styrol | 0,08% | (GC) |
| Teilchendurchmesser | 95% | < 1µm |
| pH Wert 9 | | |
| Viskosität bei 24,2°C | 0,155 Pa s bei Schergeschwindigkeit 10 1/s (Mettler RM 180 Messbecher1 Spindel 2) | |
| Feststoff | 30% Molverhältnis Styrol/Maleinsäure-monostearylamid im Feststoff 3,5/1 | |

### Beispiel 4

In einer 2L-4Halsapparatur, die - abweichend von Beispiel 1 - zur Durchmischung höher viskoser Dispersionen mit 3 kreuzweise übereinander angeordneten Balkenrührorganen ausgerüstet ist, werden 104,1 g (1Mol) Styrol (Reinheit und Stabilisierung entspr. Beispiel 1), 73,4 g Maleinsäure-monostearylamid (0,2 Mol) und 162,1 g Methacrylsäure-stearylester (0,5 Mol) unter Rühren zu einer klaren Lösung auf 82°C erhitzt. Anschließend werden 827 g entionisiertes Wasser, in denen 3,5 g Polyvinylpyrrolidon (siehe Beispiel 1), 2,7 g Polyvinylalkohol (s.Beispiel1) und 8,8 g ethox. Fettalkohol (s. Beispiel 1) gelöst sind, zugegeben und mit den Monmeren unter Erhitzen auf 82°C bei einer Rührerdrehzahl von 500U/min zu einer homogenen Dispersion gemischt. Die Polymerisation wird durch Eindosieren von 17 ml einer wäßrigen 10%igen Lösung von Ammoniumperoxidisulfat gestartet. Unter starkem Anstieg der Viskosität steigt die Reaktionstemperatur auf ca 90°C an.

Nach ca 10 min sinkt die Viskosität wieder ab und die Reaktion wird bei 82°C unter Nachdosieren weitere 17 ml der Initiatorlösung in einer Gesamtreaktionszeit von 4h zu Ende geführt.

| | | |
|---|---|---|
| Restmonomer | Maleinsäure-monostearylamid (high perf.liqu.chrom.). | 1,8 % bez.Polymer |
| | Methacrylsäure-stearylester (high perf.liqu.chrom.). | 1,1 % bzw. Polymer |
| | Styrol | 0,1% (gas.chrom.). |
| Teilchendurchmesser | 95% | 7 30 µm (Lichtmikroskop) |
| pH Wert 3-4 | | |
| Viskosität bei 24,2°C | 0,1 Pa s bei Schergeschw. 10 1/s (Mettler RM 180 Messbecher 1 Spindel 2) | |
| Feststoff | 30,3% | |

## Patentansprüche

1. Verfahren zur Herstellung von Trennmitteldispersionen zur klebstoffabweisenden Beschichtung auf flächigem, blatt- oder bahnförmigem Material, insbesondere zur Herstellung von Oberflächenüberzügen auf der Rückseite von Haftklebebändern und dergleichen, **dadurch gekennzeichnet, dass**
man durch radikalische Polymerisation in saurer oder neutraler wässriger Dispersion ein Perlpolymerisat mit Teilchengrößen im Bereich von 1 µm bis 70 µm aus Copolymeren folgender Monomerengemische herstellt:
a) 10 bis 90 Gew.-%, vorzugsweise 30 bis 80 Gew.-% (bezogen auf das Gesamtgewicht der Monomere) eines oder mehrerer Maleinsäuremonomamide oder monoester oder entsprechender Fumarsäurederivate, deren Kohlenwasserstoffreste eine Kettenlänge von 12 bis 32, vorzugsweise von 14 bis 18, Kohlenstoffatomen aufweisen, als trennwirksame Komponente, wobei das vorzugsweise eingesetzte Maleinsäuremonoamid, gegebenenfalls auch der Maleinsäuremonoester, bis etwa zu einem Drittel durch Fumarsäure- bzw. Maleinsäurediester ersetzt sein kann,
b) 10 bis 85 Gew-%, vorzugsweise 15 bis 70 Gew.% (bezogen auf das Gesamtgewicht der Monomere) Styrol oder Olefine oder Vinylether oder -ester oder (Meth)Acrylderivate oder Gemische dieser Stoffe, wobei der Anteil dieser Comonomeren oder -mischungen in einer Menge vorliegt, die für eine Copolymerisation mit den Malein- oder Fumarsäurederivaten ausreicht und ebenfalls trennwirksame Monomere enthalten kann.

2. Verfahren nach Anspruch 1, **dadurch gekennzeichnet, dass** für die Herstellung der Dispersionen wasserlösliche Stabilisatoren in Form von Polyvinylalkoholen, Polyvinylpyrrolidonen und nichtionischen Emulgatoren verwendet werden, wobei bevorzugt Gemische aus Polyvinylalkoholen, Polyvinylpyrrolidonen und ethoxylierten Fettalkoholen verwendet werden, die in einer Menge von vorzugsweise bis zu 8 Gew.% bezogen auf das Polymer eingesetzt werden.

3. Verfahren nach Anspruch 1, **dadurch gekennzeichnet, dass** man 0,5 bis 20 Gew.-%, vorzugsweise 1 bis 10 Gew.-% (bezogen auf das Gesamtgewicht der Monomere) mehrfach ungesättigter Verbindungen, vorzugsweise Divinylbenzol oder über funktionelle Gruppen vernetzende Monomere einsetzt.

4. Verfahren nach einem der Ansprüche 1 oder 2, **dadurch gekennzeichnet, dass** die Teilchengröße im Perlpolymerisat 3µm bis 50 µm beträgt.

## Claims

1. Process for preparing release agent dispersions for adhesive-repellent coating on flat, sheetlike or web-form material, especially for producing surface coatings on the reverse side of pressure-sensitive adhesive tapes and the like, **characterized in that** by free-radical addition polymerization in acidic or neutral, aqueous dispersion a bead polymer with particle sizes in the range from 1 µm to 70 µm is prepared from copolymers of the following monomer mixtures:
a) from 10 to 90% by weight, preferably from 30 to 80% by weight (based on the total weight of the monomers) of one or more maleic acid monoamides or monoesters or corresponding fumaric acid derivatives whose hydrocarbon radicals have a chain length of from 12 to 32, preferably from 14 to 18, carbon atoms, as release-effect component, it being possible for up to about a third of the maleic monoamide used with preference, and where appropriate also of the maleic monoesters, to have been replaced by fumaric and/or maleic diesters,
b) from 10 to 85% by weight, preferably from 15 to 70% by weight (based on the total weight of the monomers) of styrene or olefins or vinyl ethers or vinyl esters or (meth)acrylic derivatives or mixtures of these substances, the fraction of these comonomers or comonomer mixtures being present in an amount which is sufficient for copolymerization with the maleic or fumaric acid derivatives and possibly likewise comprising release-effect monomers.

2. Process according to Claim 1, **characterized in that** for preparing the dispersions water-soluble stabilizers in the form of polyvinyl alcohols, polyvinylpyrrolidones and nonionic emulsifiers are used, preference being given to the use of mixtures of polyvinyl alcohols, polyvinylpyrrolidones and ethoxylated fatty alcohols which are used in an amount of preferably up to 8% by weight, based on the polymer.

3. Process according to Claim 1, **characterized in that** from 0.5 to 20% by weight, preferably from 1 to 10% by weight (based on the total weight of the monomers) of polyunsaturated compounds, preferably divinylbenzene or monomers which crosslink by way of functional groups, are used.

4. Process according to one of Claims 1 or 2, **characterized in that** the particle size in the bead polymer is from 3µm to 50µm.

## Revendications

1. Procédé pour la préparation de dispersions d'agent de séparation pour le revêtement repoussant les adhésifs sur un matériau plat, en forme de feuille ou de bande, en particulier pour la préparation de revêtements superficiels sur le dos de bandes auto-adhésives et analogues, **caractérisé en ce qu'**on prépare par polymérisation radicalaire dans une dispersion aqueuse. acide ou neutre un polymère en perles présentant des grosseurs de particules dans la plage de 1 µm à 70 µm à partir de copolymères des mélanges de monomères suivants :
a) 10 à 90% en poids, de préférence 30 à 80% en poids (par rapport au poids total des monomères) d'un ou de plusieurs monoamides ou monoesters de l'acide maléique ou de dérivés correspondants de l'acide fumarique, dont le radical hydrocarboné présente une longueur de chaîne de 12 à 32, de préférence de 14 à 18 atomes de carbone, comme composant actif en séparation, le monoamide de l'acide maléique utilisé de préférence, le cas échéant également le monoester de l'acide maléique, pouvant être remplacé jusqu'à un tiers par le diester de l'acide maléique ou fumarique,
b) 10 à 85% en poids, de préférence 15 à 70% en poids (par rapport au poids total des monomères) de styrène ou d'oléfines ou de vinyléthers ou de vinylesters ou de dérivés de l'acide (méth)acrylique) ou de mélanges de ces substances, une proportion de ces comonomères ou mélanges de comonomères se trouvant en une quantité qui suffit pour une copolymérisation avec les dérivés de l'acide maléique ou fumarique et pouvant également contenir des monomères actifs en séparation.

2. Procédé selon la revendication 1, **caractérisé en ce qu'**on utilise pour la préparation des dispersions des stabilisants solubles dans l'eau sous forme de poly(alcools vinyliques), de polyvinylpyrrolidones et d'émulsifiants non ioniques, en utilisant de préférence des mélanges de poly(alcools vinyliques), de polyvinylpyrrolidones et d'alcools gras éthoxylés, qui sont utilisés en une quantité allant de préférence jusqu'à 8% en poids par rapport au polymère.

3. Procédé selon la revendication 1, **caractérisé en ce qu'**on utilise 0,5 à 20% en poids, de préférence 1 à 10% en poids (par rapport au poids total des monomères) de composés polyinsaturés, de préférence du divinylbenzène ou des monomères réticulant via des groupes fonctionnels.

4. Procédé selon l'une quelconque des revendications 1 ou 2, **caractérisé en ce que** la grosseur des particules dans le polymère en perles est de 3 µm à 50 µm.
